Europäisches Patentamt

European Patent Office

Office européen des brevets

(19)

(11) Veröffentlichungsnummer: **0 410 339 A2**

# (12) EUROPÄISCHE PATENTANMELDUNG

(21) Anmeldenummer: **90114040.0**

(22) Anmeldetag: **23.07.90**

(51) Int. Cl.5: **F16L 9/18**

(30) Priorität: **27.07.89 DE 3924791**

(43) Veröffentlichungstag der Anmeldung:
**30.01.91 Patentblatt 91/05**

(84) Benannte Vertragsstaaten:
**AT BE CH DE DK ES FR GB GR IT LI LU NL SE**

(71) Anmelder: **DROSSBACH GmbH & Co. KG KG**
**Am Walburgastein 7**
**D-8852 Rain am Lech(DE)**

(72) Erfinder: **Dietrich, Karl**
**Maximilianstrasse 32**
**D-8852 Rain am Lech(DE)**
Erfinder: **Drossbach, Hubert M., Dipl.-Ing.**

**D-8859 Schloss Sinning(DE)**
Erfinder: **Sörgel, Fritz-Peter, Dipl.-Ing.**
**Ziegelmoosstrase 23**
**D-8852 Rain(DE)**

(74) Vertreter: **Meyer, Ludgerus et al**
**Patentanwälte Meyer, Stach, Vonnemann**
**Jungfernstieg 38**
**D-2000 Hamburg 36(DE)**

(54) **Doppelwandrohr und Verfahren zu seiner Herstellung.**

(57) Es wird ein Doppelwandrohr angegeben, bei dem zur Bildung eines stutzenseitigen und eines muffenseitigen Endes die Rippenhöhe des Außenwandrohres in diesen Bereich verringert wird. Im stutzenseitigen Ende wird der Außendurchmesser der Rippen reduziert, während am muffenseitigen Ende der Innendurchmesser des Innenrohres zusätzlich aufgeweitet wird. Durch diese Maßnahme bleibt die Stabilität von zusammengesetzten derartigen Doppelwandrohren im wesentlichen erhalten.

Fig. 2

## DOPPELWANDROHR UND VERFAHREN ZU SEINER HERSTEILUNG

Die Erfindung betrifft ein Doppelwandrohr, das insbesondere für Kanalisationsaufgaben verwendbar ist, sowie ein Verfahren zur Herstellung eines derartigen Rohres.

Handelsübliche glatte Kunststoffrohre weisen eine relativ geringe Ringsteifigkeit (DIN 16961) auf, die in der Regel unter 5 liegt. Höhere Ringsteifigkeiten sind mit wirtschaftlich vertretbaren Mitteln nicht zu erzielen.

Es ist bekannt, Doppelwandrohre herzustellen, die innenseitig glatt sind und auf der Außenseite eine Rippenstruktur aufweisen. Derartige Doppelwandrohre werden üblicherweise aus einem mit konzentrischen Düsenöffnungen versehenen Spritzkopf hergestellt, wobei der innere extrudierte Schlauch über einen außen glatten Dorn geführt wird und der äußere Schlauch unter Stützlufteinblasung zwischen innerem und äußerem Schlauch durch eine wandernde Formenanordnung eine Rippenstruktur erfährt, wobei die inneren Rippen des äußeren Rohres sich mit dem Innenrohr verbinden und dadurch ein äußerst stabiles Doppelwandrohr gebildet wird. Bei Doppelwandrohren können durch geeignete Wahl von Profilhöhe und Wandstärken Ringsteifigkeiten von 6 bis 7 erreicht werden.

Derartige Doppelwandrohre werden sowohl aus PE als auch aus PVC hergestellt, wobei sich insbesondere PVC im Kanalisationsbereich aufgrund seiner hohen Stabilität und Abriebfestigkeit mit Vorteil einsetzen läßt.

Kanalisationsrohre weisen in der Regel einen großen Durchmesser auf, der es bedingt, daß die verwendeten Rohre nur in geraden Abschnitten bestimmter Länge hergestellt werden können. Dies erfordert es, daß Rohre untereinander und mit Anschlußfittings verbunden werden müssen.

Bei glatten einfachen Rohren weisen derartige Rohrabschnitte in der Regel ein Stutzenende und ein Muffenende auf, wobei das Muffenende soweit aufgeweitet ist, daß ein Anschlußstutzen eines Fittings oder eines anderen Rohres in diese Muffe hineingeschoben werden kann. Zur weiteren Abdichtung wird in der Regel ein in einer Sicke umlaufend angeordneter Dichtring verwendet.

Doppelwandrohre weisen einen äußeren Durchmesser auf, der erheblich über dem inneren Durchmesser des Innenrohres liegt. Daher ist es z.B. bei PE nicht möglich, das muffenseitige Ende eines Rohres soweit aufzudehnen, daß das stutzenseitige Ende eines Fittings oder eines entsprechenden Doppelwandrohres ohne weiteres in diese Muffe eingeführt werden kann. Es wurden daher Adapter vorgeschlagen, die ein stutzenseitiges Ende eines glatten Rohres nachbilden, und die auf der anderen Seite eine Muffe aufweisen, deren Innendurchmesser dem Außendurchmesser eines Doppelwandrohres entspricht. Ein derartiger Adapter ist als Einfachrohr-Abschnitt ausgebildet. In seiner Muffe kann auch eine Sicke zur Aufnahme eine Dichtringes vorgesehen sein.

Da ein Adapter nur aus einem Einfach-Rohr hergestellt ist, ist seine Stabilität geringer als die eines Doppelwandrohres. Durch die notwendige starke Aufweitung, um das Doppelwandrohr in den Adapter einschieben zu können, und durch den aufgrund der Sicke zur Aufnahme des O-Rings erforderlichen Wulst ergibt sich ein erheblicher Überstand über dem Außendurchmesser des Doppelwandrohres. Es besteht daher das Bestreben, den Einsatz von Adaptern möglichßt zu vermeiden.

Der Erfindung liegt die Aufgabe zugrunde, ein Doppelwandrohr und ein Verfahren zu dessen Herstellung in der Weise auszubilden, daß an Verbindungsstellen des Doppelwandrohres mit Fittings oder anderen Doppelwandrohren eine hohe Stabilität beibehalten bleibt, kein zusätzlicher Adapter erforderlich ist und der Außendurchmesser allenfalls geringfügig überhöht ist.

Diese Aufgabe wird durch die in den Ansprüchen 1 und 6 angegebene Erfindung gelöst. Vorteilhafte Weiterbildungen der Erfindung sind in Unteransprüche angegeben.

Das erfindungsgemäße Doppelwandrohr weist ein muffenseitiges und ein stutzenseitiges Ende auf, die derart ausgebildet sind, daß ein unmittelbares Zusammensetzen gleichartiger Rohre oder solcher Rohre mit Fittings möglich ist. Durch die Reduzierung des Außendurchmessers der äußeren Rippen wird die Stabilität im Stutzenbereich nur soweit geschwächt, daß nach Einschieben des Stutzens in eine entsprechende Muffe eines Anschlußrohres die Gesamtstabilität an der Verbindungsstelle zumindest die Stabilität erreicht, die das Doppelwandrohr im mittleren Bereich aufweist. Die Reduzierung des Durchmessers der Außenwandrippen ermöglicht auch das einfache Hineinschieben in eine Muffe, die z.B. einen O-Ring oder eine Lippendichtung aufweist. Es besteht nicht die Gefahr, daß der Dichtring zwischen zwei Rippen zur Anlage kommt und daher die Dichtungsfunktion möglicherweise nur unvollständig erfüllt.

Wenn der Außenwanddurchmesser im muffenseitigen Bereich ebenfalls reduziert wird, kann durch eine innere Aufweitung des Innenrohres eine Muffe gebildet werden, bei der der Außendurchmesser nicht oder nur unwesentlich größer wird als der Außendurchmesser des Rohres im mittleren Bereich. Die Verbindungsstellen verschiedener Rohre weisen dadurch keinen Durchmessersprung auf, so daß die Handhabung erleichtert ist und sich über die gesamte Länge eines zusammengesetzten Rohres ein gleichmäßiger Außendurchmesser ergibt.

Die Erfindung wird nachstehend anhand eines Ausführungsbeispiels erläutert.

Es zeigen:

Fig. 1 ein Doppelwandrohr mit aufgesetztem Adapter nach dem Stand der Technik bezüglich des stutzenseitigen Endes,

Fig. 2 ein erfindungsgemäß ausgebildetes Doppelwandrohr,

Fig. 3 eine vergrößerte Ansicht eines stutzenseitigen Endes eines erfindungsgemäßen Doppelwandrohr-Abschnitts.

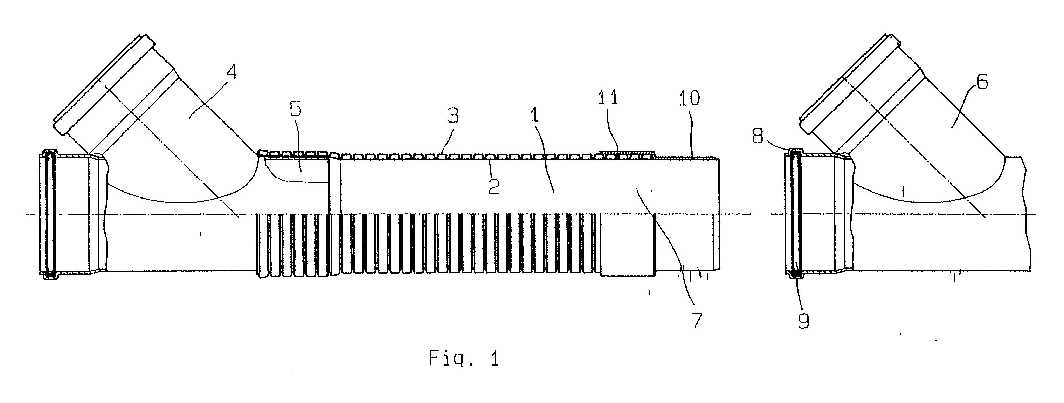

In Fig. 1 ist ein übliches Doppelwandrohr 1 dargestellt, das ein stutzenseitiges Ende 7 und ein muffenseitiges Ende 5 aufweist. Auf das stutzenseitige Ende ist in bekannter Weise ein Adapter 10 aufgesetzt, der aus einem einlagigen Rohr gebildet ist. Das Vorderteil des Adapters 10 kann in das muffenseitige Ende eines Fittings 6 eingeschoben werden, wobei durch einen Dichtring 8, der in einer Sicke 9 des Fittings 6 eingelassen ist, eine Abdichtung erfolgen kann. Ein Stutzen 4 ist in das muffenseitige Ende 5 des Rohres eingesetzt.

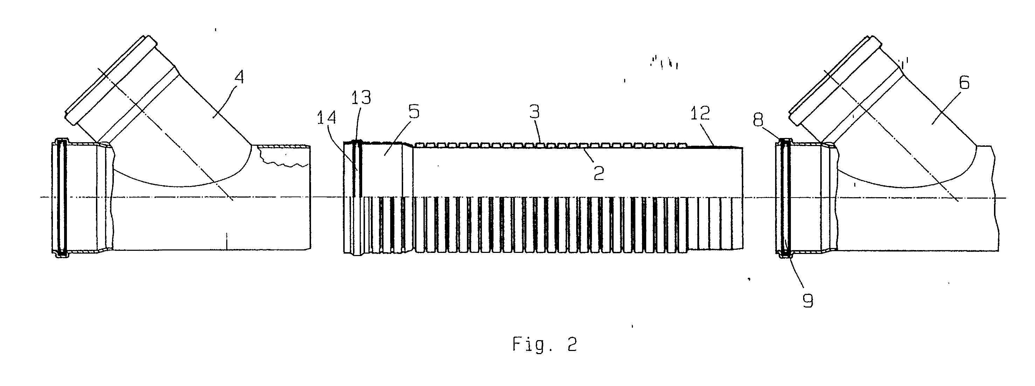

Fig. 2 zeigt das erfindungsgemäße Doppelwandrohr. Dieses weist ein glattes Innenrohr 2 und ein mit Rippen versehenes Außenwandrohr 3 auf. Erfindungsgemäß wird am stutzenseitigen Ende 12 des Doppelwandrohres der Außendurchmesser der Rippen des Außenwandrohres im Außendurchmesser soweit reduziert, daß dieses Ende in einen üblichen Fitting 6 oder ein anderes Dopelwandrohr eingeschoben werden kann. Durch einen Dichtring 8, der in einer Sicke 9 des Fittings 6 aufgenommen ist, kann eine Abdichtung erfolgen. Vorzugsweise ist der Außendurchmesser der Rippen des Außenwandrohres auf das 0,4 - 0,6-fache der Durchmesserdifferenz zwischen Innendurchmesser und Außendurchmesser des Doppelwandrohres reduziert. Die erste Rippe kann zur leichteren Einführung in den Stutzen noch stäarker abgeflacht sein.

Am muffenseitigen Ende des Doppelwandrohr-Abschnittes sind die Rippen des Außenwandrohres ebenfalls abgeflacht, wobei jedoch das Innenrohr 2 in diesem Bereich eine Aufweitung erfährt. Nach Reduzierung der Rippenhöhe kann eine muffenförmige Aufweitung vorgenommen werden, wobei im Ergebnis im wesentlichen keine Vergrößerung des Außendurchmessers des Rohres eintritt. Es kann zusätzlich eine Sicke 14 vorgesehen werden, in die ein O-Ring oder eine Lippendichtung einlegbar ist. Wenn diese Sicke einer Rippe entspricht, ist hierdurch ebenfalls kein weiterer Überstand des Außendurchmessers bewirkt.

Ein derartiges Doppelwandrohr wird erfindungsgemäß dadurch hergestellt, daß zwei gleichzeitig hergestellte und miteinander verbundene konzentrische Kunststoffrohre gebildet werden, wobei die Außenstruktur des Außenwandrohres bei der Herstellung mit Hilfe wandernder Formenhälften ausgebildet ist, bei dem die das stutzenseitige und/oder muffenseitige Ende des Außenwandrohres formenden Formhälften im Außendurchmesser der Rippenstruktur reduziert sind. Die Durchmesserreduzierung kann jedoch auch nachträglich unter Wärmeeinwirkung durch Formbacken erfolgen. Vorzugsweise werden in die Rippen Öffnungen eingestanzt, um den sonst entstehenden Überdruck in den Rippen auszugleichen.

Die Aufweitung im Muffenbereich kann unter Wärmeeinwirkung durch einen Spreizkern erfolgen, wobei der Außendurchmesser festgehalten bleibt.

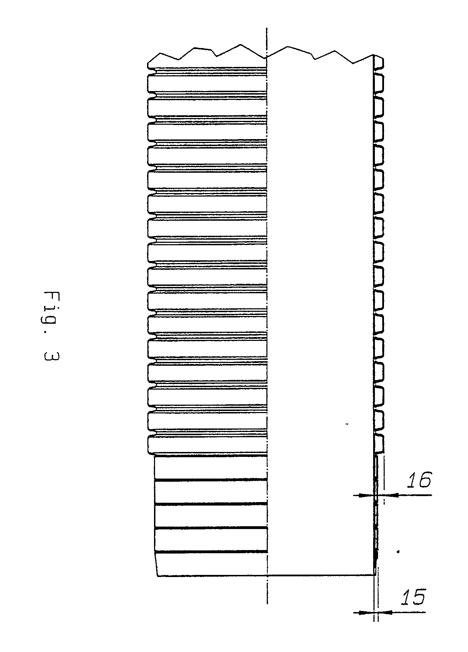

Fig. 3 zeigt eine vergrößerte Ansicht des stutzenseitigen Endes eines erfindungsgemäßen Doppelwandrohres. Die ursprüngliche Durchmesserdifferenz 16 ist erfindungsgemäß auf den Wert 15 verringert worden.

In einer weiteren Ausführungsform der Erfindung können die Rohrenden auch als angespritzte oder angeschweißte, im Spritzguß hergestellte Muffen und Stutzen ausgeführt werden.


## Ansprüche

1. Doppelwandrohr mit einem muffen- und stutzenseitigen Ende, bestehend aus einem Innenwandrohr und einem quergewellten Außenwandrohr, dessen nach innen gerichtete Rippen mit dem Innenwandrohr unlösbar verbunden sind, **dadurch gekennzeichnet,** daß der Außendurchmesser der Rippen des Außenwandrohres (3) im stutzenseitigen Endbereich des Doppelwandrohres zum Einstecken in das Muffenende eines anzuschließenden Fittings (6) oder eines weiteren Rohres reduziert ist.

2. Doppelwandrohr nach Anspruch 1, **dadurch gekennzeichnet,** daß der Außendurchmesser der Rippen des Außenwandrohres (3) um das 0,4 bis 0,6-fache der Durchmesserdifferenz (16) zwischen Innendurchmesser und Außendurchmesser des Doppelwandrohres reduziert ist.

3. Doppelwandrohr nach Anspruch 1, **dadurch gekennzeichnet,** daß im bezüglich des Innendurchmessers aufgeweiteten muffenseitige Ende die Rippenhöhe des Außenwandrohres soweit reduziert ist, daß der Außendurchmesser in diesem Bereich im wesentlichen dem Außendurchmesser der Rippen des Außenwandrohres im übrigen Rohrbereich entspricht.

4. Doppelwandrohr nach Anspruch 3, **dadurch gekennzeichnet,** daß das Innenwandrohr (2) im Muffenbereich des Doppelwandrohres eine Sicke zur Aufnahme eines Dichtrings aufweist.

5. Doppelwandrohr nach einem oder mehrere der vorhergehenden Ansprüche, **dadurch gekennzeichnet,** daß das Rohr aus PVC-U besteht.

6. Verfahren zur Herstellung eines Doppelwandrohres, bestehend aus zwei gleichzeitig hergestellten und miteinander verbundenen konzentrischen Rohren nach einem oder mehreren der Ansprüche 1 - 5, wobei die Außenstruktur des Außenwandrohres bei der Herstellung mit Hilfe wandernder Formenhälften ausgebildet wird, **dadurch gekennzeichnet,** daß die wenigstens ein Ende des Außenwandrohres formenden Formhälften im Außendurchmesser der Rippenstruktur reduziert sind.

7. Verfahren nach Anspruch 6, **dadurch gekennzeichnet,** daß das muffenseitige Ende des Doppelwandrohres zunächst bezüglich des Außendurchmessers der Rippenstruktur reduziert wird und daß anschließend eine Innendurchmesser-Aufweitung des muffenseitigen Endes des Doppelwandrohres erfolgt.

8. Verfahren nach Anspruch 6 oder 7, **dadurch gekennzeichnet,** daß die Außenwandrippen des Doppelwandrohres vor oder nach ihrer Durchmesserverjüngung mit Druckentlastungsöffnungen versehen werden.

9. Verfahren nach Anspruch 7, **dadurch gekennzeichnet,** daß während der Aufweitung eine Sikkenausformung zur Aufnahme eines Dichtringes erfolgt.

Fig. 1

Fig. 2

Fig. 3